# EUROPÄISCHE PATENTSCHRIFT

(11) **EP 1 737 707 B1**
(45) Veröffentlichungstag und Bekanntmachung des Hinweises auf die Patenterteilung: **12.03.2008**
(21) Anmeldenummer: 05716314.9
(22) Anmeldetag: 23.03.2005
(51) Int. Cl.: B60R 21/16, D06N 3/00, B32B 27/12

(54) **VERFAHREN UND VORRICHTUNG ZUR HERSTELLUNG BESCHICHTETER GEWEBETEILE**
METHOD AND DEVICE FOR PRODUCING COATED FABRIC PARTS
PROCEDE ET DISPOSITIF POUR LA PRODUCTION DE PIECES DE TISSU RECOUVERTES

(30) Priorität: 06.04.2004 DE 102004016798
(43) Veröffentlichungstag der Anmeldung: 03.01.2007
(73) Patentinhaber: Automotive Safety Components International GmbH & Co. KG, 31135 Hildesheim (DE)
(72) Erfinder: GOTTSCHALK, Markus, 31135 Hildesheim (DE)
(74) Vertreter: Sobisch, Peter
(86) Internationale Anmeldenummer: PCT/EP2005/003076
(87) Internationale Veröffentlichungsnummer: WO 2005/100103

(56) Entgegenhaltungen:
- DE-A1- 4 028 637
- DE-A1- 4 325 936
- DE-A1- 4 426 844
- US-A- 5 110 666
- US-A- 5 538 280
- US-A1- 2003 178 823
- US-A1- 2004 029 468

## Beschreibung

Die Erfindung bezieht sich auf ein Verfahren eine Verwendung des Verfahrens und eine Vorrichtung zur Herstellung beschichteter Gewebeteile gemäß der Ansprüche 1,4 und 5.

Beschichtete Gewebeteile finden beispielsweise, jedoch nicht ausschließlich Anwendung bei der Herstellung von Luftsäcken für Airbagsysteme. Diese Luftsäcke bestehen regelmäßig aus mehreren Einzelteilen, die nach erfolgter Her stellung, nämlich Zuschneiden und Beschichten miteinander zu verbinden sind. Die Einzelteile werden mit Hinblick auf eine erforderliche Festigkeit, Hitzebeständigkeit, Gasundurchlässigkeit und erwünschte Elastizitätseigenschaften aus einem, mit Silikonkautschuk beschichteten Gewebe hergestellt.

Es ist im Hause der Anmelderin bekannt, zur Herstellung dieser Einzelteile des Luftsackes von einer auf einer Rolle aufgewickelten Gewebebahn auszugehen, die in einem kontinuierlichen Verfahren von der Rolle abgewickelt und verarbeitet wird. Ein in einer Horizontalebene geführter Bahnabschnitt des Gewebes wird oberseitig über seine gesamte Breite mit einem im Ausgangszustand fließfähigen Silikonkautschuk beschichtet, der nach Glättung mittels eines Rakels einer Beheizung bzw. Vulkanisation unterzogen wird. Aus dem beschichteten vulkanisierten Gewebe werden anschließend die zur Herstellung des Luftsackes benötigten Einzelteile beispielsweise mittels einer Laserschneidanlage ausgeschnitten, wohingegen die verbleibenden Flächenabschnitte der beschichteten Gewebebahn als Reststoffe entsorgt werden. Die beschichteten Einzelteile werden anschließend zwecks Herstellung des Luftsackes miteinander verbunden. Ein hiermit grundsätzlich vergleichbares Verfahren, bei dem in einem ersten Schritt ein Gewebe zunächst vollständig beschichtet wird, wobei anschließend aus der Fläche des Gewebes die benötigten Teile zur Herstellung eines Luftsackes für ein Airbagsystem herausgeschnitten werden, ist beispielsweise aus der US 2004/0029468 A1 bekannt.

Silikon bzw. Silikonkautschuk ist ein verhältnismäßig teurer Ausgangsstoff. Dieser Umstand wirkt sich bei der vorstehend geschilderten Arbeitsweise besonders nachteilig aus, da derartige Produkte in großen Mengen hergestellt werden und der entstehende Abfallanteil regelmäßig bis zu ca. 20 Gew.-% bis 30 Gew.-% des beschichteten Gewebes ausmacht. Es entstehen somit beträchtliche Mengen an Reststoffen, deren Entsorgung und eventuelle Wiederverwertung aufgrund ihrer heterogenen stofflichen Zusammensetzung problematisch ist.

Aus der DE 40 28 637 A1 ist ein Verfahren zum partiellen Beschichten von Geweben bekannt, welche als Teile eines Airbagsystems konzipiert sind. Angestrebt werden hierbei Gewebeteile, die teilweise beschichtet sind, die anschließend zwecks Bildung eines Luftsackes miteinander vernäht werden. Mit einer lediglich teilweisen Beschichtung wird in den unbeschichteten Bereichen eine gegenüber den beschichteten Bereichen erhöhte Luftdurchlässigkeit eingerichtet. Darüber hinaus soll mit dem Beschichten die Bearbeitbarkeit des Gewebes, insbesondere das Schneiden des Gewebes verbessert werden, so dass in jedem Fall entlang der Berandungen der genannten Teile eine Beschichtung vorliegt. Das eingangs genannte Entsorgungsproblem, welches sich bei einem vollflächigen Beschichten des Gewebes nach dem Ausschneiden der benötigten Einzelteile und dem Verwerfen der Restteile ergibt, stellt sich bei diesem bekannten Verfahren nur sehr eingeschränkt.

Ein vergleichbares Verfahren, bei dem wiederum in einem ersten Schritt ein Gewebe selektiv beschichtet und anschließend aus diesem die zur Herstellung eines Airbagsystems benötigten Teile ausgeschnitten werden, ist auch aus der US 5 538 280 bekannt. Eine Beschichtung ist hiernach insbesondere an Stellen eingerichtet, an denen ein Schnitt erfolgt. Es wird wiederum keine vollflächige Beschichtung angestrebt sondern lediglich eine teilweise; um auf diesem Wege die globale Luftdurchlässigkeit des Teiles einzustellen.

Bei einem Luftsack werden bisweilen unterschiedliche Gewebesorten und/oder Gewebe mit unterschiedlichem Silikongewicht eingesetzt. Das bekannte Verfahren eröffnet jedoch faktisch kaum Möglichkeiten zu einer an das Einzelteil angepassten Variierung des Silikongewichtes. Somit fallen regelmäßig Abfallstoffe an, die sich in der Art des Gewebes und hinsichtlich des Silikongewichtes unterscheiden.

Aus der US 5 110 666 ist ein weiteres Verfahren zur Herstellung von Gewebeteilen eines Airbagsystems bekannt, bei welchem ein selektives Beschichten von Gewebeteilen eingerichtet ist. Das Verfahren ist kontinuierlich angelegt, wobei eine von einer Eingangsrolle abgewickelte Gewebebahn auf wenigstens einer Seite mit einer gleichmäßigen Folge von einzelnen Beschichtungsmustern überzogen wird, welche nach Durchlaufen eines Härtungsofens anschließend wieder aufgewickelt werden. Zur Gewinnung von unmittelbar zur Herstellung eines Airbagsystems nutzbaren Gewebeteilen werden von der die Flächenmuster tragenden aufgewickelten Gewebebahn gleichförmige Längenabschnitte abgeschnitten und anschließend nach Maßgabe der Konturen der herzustellenden Gewebeteile zugeschnitten.

Es ist vor diesem Hintergrund die Aufgabe der Erfindung, ein Verfahren der eingangs bezeichneten Art mit Hinblick auf eine Verbesserung der Variabilität des Produktes, eine Verminderung anfallender Abfallstoffe, einer Homogenisierung anfallender Abfallstoffe und eine einfache Verfahrensführung hin auszugestalten.

Gelöst ist diese Aufgabe bei einem solchen Verfahren durch die Merkmale des Anspruchs 1.

Erfindungswesentlich ist hiernach, dass in Abweichung von dem eingangs dargelegten Stand der Technik die Gewebebahn nur nach Maßgabe der flächigen Erstreckung der aus dieser ausgeschnittenen Einzelteile mit einer Beschichtungsmasse überzogen wird. Dies bedeutet, dass Reststoffe nur in der Form von unbeschichtetem Gewebe anfallen, so dass eine entsorgungstechnische Behandlung beträchtlich vereinfacht wird. Entsprechend den Kosten der Beschichtungsmasse sowie der bezüglich der Fläche der Gewebebahn geometrisch bedingten Menge an Reststoffen ergibt sich eine Materialeinsparung an Beschichtungsmasse. Entsprechend den gewünschten Eigenschaften der beschichteten Einzelteile sind Variierungen der Beschichtungsgewichte der Einzelteile, nämlich der Beschichtungsdicke selbst individuell für jedes Einzelteil realisierbar. Infolge der Homogenität der Reststoffe entfallen Trennprozesse, welche auf die Wiedergewinnung einzelner, insbesondere verwertbarer werkstofflicher Komponenten gerichtet sind.

Zur Realisierung der Beschichtung wird von dem an sich bekannten Siebdruckverfahren Gebrauch gemacht. Das Siebdruckverfahren kann grundsätzlich nach allen Varianten angelegt sein, wobei lediglich beispielhaft der Flachsiebdruck, der Zylindersiebdruck, der Rotationssiebdruck oder auch der elektrostatische Siebdruck genannt seien. Wesentlich ist in allen Fällen, dass ein Sieb für die Beschichtungsmasse durchlässige und undurchlässige Flächenanteile aufweist, deren Größe, Gestalt und Lage an die zu beschichtenden, aus der Gewebebahn auszuschneidenden Einzelteile angepasst ist, so dass die Beschichtungsmasse nur über die durchlässigen Flächenanteile auf die Einzelteile gelangt. Beschichtete Reststoffe fallen somit nicht an.

Die Merkmale der Ansprüche 2 und 3 sind auf eine vorteilhafte Anwendung des erfindungsgemäßen Verfahrens gerichtet, nämlich zur Herstellung von mit Silikon beschichteten Einzelteilen. Im Bedarfsfall können hierbei in einfacher Weise Einzelteile mit unterschiedlich stark beschichtetem Gewebe hergestellt werden. Hierbei können grundsätzlich heiß- und kaltvulkanisierende Silikone eingesetzt werden, und zwar insbesondere mit Hinblick auf ihre hohe Hitzebeständigkeit, den Flammschutz sowie auf ihre, über einen großen Temperaturbereich weitgehend konstante Elastizität.

Vorteilhaft wird dieses Verfahren erfindungsgemäß zur Herstellung der aus einem mit Silikon beschichteten Gewebe bestehenden Einzelteile des Luftsacks eines Airbagsystems benutzt.

Es ist ferner die Aufgabe der Erfindung, eine Vorrichtung zur Durchführung dieses Verfahrens entsprechend dem Oberbegriff des Anspruchs 5 zu konzipieren. Gelöst ist diese Aufgabe bei einem solchen Verfahren durch die Merkmale des Kennzeichnungsteils des Anspruchs 5.

Die Vorrichtung besteht hiernach aus der Hintereinanderanordnung einer Zuschneide-, einer Beschichtungs- und einer Beheizungsstation, die untereinander über Fördersysteme in Verbindung stehen. Die Vorrichtung kann für einen kontinuierlichen Betrieb konzipiert sein, dessen Austragsprodukte aus beschichteten Gewebeteilen und unbeschichteten, als Abfall anzusehenden Gewebeteilen besteht. Sie bietet durch die Möglichkeit der Einsparung an Beschichtungsstoff sowie der einfacheren Handhabung der stofflich weitgehend anfallenden Abfälle kostenmäßige Vorteile. Sie bietet ferner technische Vorteile hinsichtlich der einfachen, individuell an das zu beschichtende Einzelteil angepassten Beschichtungsdicke.

Die Erfindung wird im Folgenden unter Bezugnahme auf das in den Zeichnungen dargestellte Verfahrensablaufschema zur Herstellung des Luftsackes eines Airbagsystems näher erläutert werden. Es zeigen:
Fig. 1 die Zuschneidung der Einzelteile eines Luftsackes im Ausgangszustand;
Fig. 2 das Silikonaufbringen auf das Gewebe;
Fig. 3 das Trocknen des beschichteten Gewebes;
Fig. 4 eine Darstellung der zur Herstellung eines Luftsackes miteinander zu verbindenden fertigen Einzelteile.

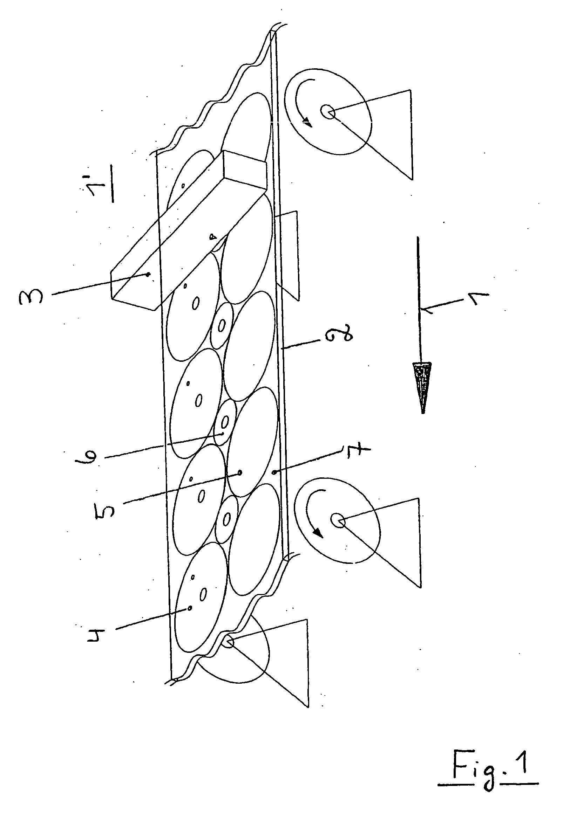

Ausgangspunkt des erfindungsgemäßen Verfahrens ist gemäß Fig. 1 eine sich in Richtung des Pfeiles 1 gleichförmig oder auch taktweise vorzugsweise in einer Zuschneidestation 1' horizontal bewegende, aus einem Gewebe 2 bestehende Bahn, die von einer zeichnerisch nicht dargestellten Rolle abgewickelt wird. Der Vorschub der Bahn kann konstruktiv beliebig bereitgestellt werden, worauf im Folgenden nicht näher eingegangen werden wird.

Mittels einer Schneidvorrichtung 3, z. B. einer Laserschneidvorrichtung werden aus der Ebene der Bahn Einzelteile 4, 5, 6 ausgeschnitten, deren Konturen und sonstige Beschaffenheit den miteinander zu verbindenden Einzelteilen des Luftsackes entsprechen.

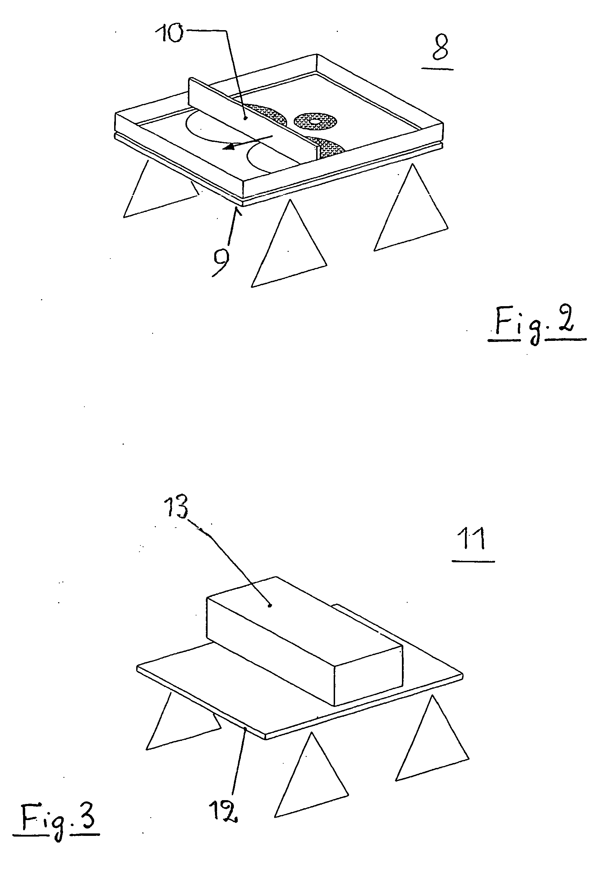

In einem nächsten Schritt werden - noch innerhalb der Zuschneidestation 1'-die Einzelteile 4, 5, 6 von den Restteilen 7 des Gewebes 2 getrennt, wobei Letztgenannte als Abfall verworfen werden. Die Einzelteile 4, 5, 6 gelangen anschließend in eine, in Fig. 2 schematisch dargestellte, zum Auftragen einer Silikonschicht bestimmten und eingerichteten Beschichtungsstation 8.

Diese Beschichtungsstation 8 ist nach dem aus der Drucktechnik bekannten Funktionsprinzip des Siebdruckverfahrens eingerichtet. Dies bedeutet, dass auf die, auf einer ebenen horizontalen Unterlage 9 an definierten Positionen aufliegenden Einzelteile 4, 5, 6 ein feinmaschiges Sieb gelegt wird, auf welches Silikonkautschuk in fließfähiger bzw. streichfähiger Konsistenz aufgetragen und mittels eines Rakels 10 geglättet wird. Das Sieb ist derart beschaffen, dass es Flächenanteile aufweist, durch welche der Silikonkautschuk hindurchtritt und solche Flächenanteile, die abgedeckt oder ausgefüllt sind, so dass kein Silikonkautschuk hindurchtreten kann.

Auf der Unterlage 9 werden die Einzelteile 4, 5, 6 mit der Maßgabe platziert, dass sich die durchlässigen Flächenanteile des Siebes oberhalb dieser Einzelteile befinden. Hinsichtlich der Fläche sowie in geometrischer Hinsicht sind die durchlässigen Flächenanteile an die genannten Einzelteile angepasst. Die Maschenweite des Siebes und die Viskosität des Silikonkautschuks als Beschichtungsmasse sind dahingehend gewählt, dass diese Masse durch die durchlässigen Flächenanteile hindurchgepresst wird und diese geometrisch auf die Einzelteile abbildet.

Als Austragsprodukt der Beschichtungsstation 8 fallen somit Einzelteile 4, 5, 6 an, die mit einer Schicht aus Silikonkautschuk überzogen sind. Diese werden anschließend zwecks Vernetzung bzw. Trocknung einer in Fig. 3 schematisch dargestellten Beheizungsstation 11 zugeführt. Die beschichteten Einzelteile liegen auf einer Unterlage 12 auf, oberhalb welcher sich eine Beheizungseinrichtung 13 befindet. Hierbei kommt entsprechend der Art des eingesetzten Silikons zu einer Vernetzungsreaktion.

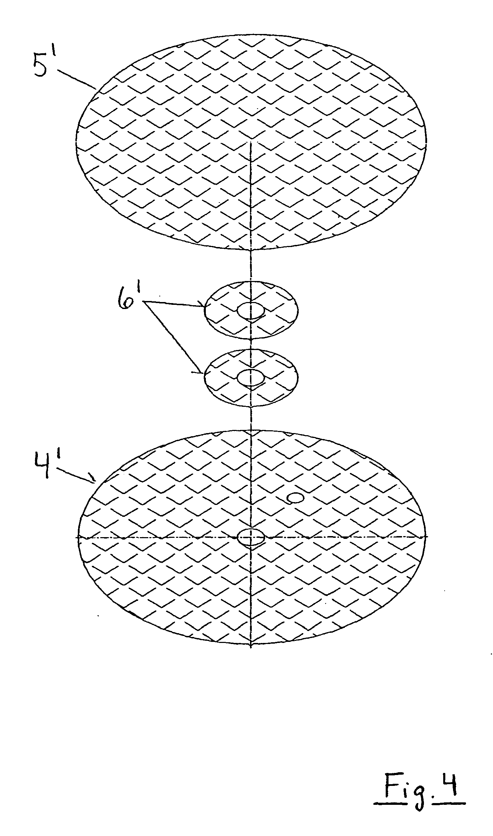

Als Ausgangsproduke der Beheizungsstation 11 fallen die in Fig. 4 beispielhaft in ihren Konturen gezeigten fertigen Einzelteile 4', 5', 6', die somit aus einem mit Silikon beschichteten Gewebe bestehen und es werden diese Einzelteile anschließend in an sich bekannter Weise zwecks Herstellung des Luftsackes miteinander verbunden.

Die Zuschneidestation (1'), die Beschichtungsstation (8) sowie die Beheizungsstation bilden jeweils Verfahrensstufen eines einheitlichen Verfahrens, die über zeichnerisch nicht dargestellte Fördersysteme untereinander in Verbindung stehen.

## Patentansprüche

1. Verfahren zur Herstellung von aus Gewebe (2) bestehenden, mit einer, im Ausgangszustand fließ- bzw. streichfähigen Beschichtungsmasse beschichteten, flächigen Einzelteilen (4',5',6') ausgehend von einer, von einer Rolle abgewickelten Gewebebahn, **dadurch gekennzeichnet, dass** die unbeschichteten Einzelteile (4,5,6) aus der Gewebebahn ausgeschnitten und die verbleibenden Restteile (7) der Gewebebahn als Abfall verworfen werden, dass die unbeschichteten Einzelteile (4,5,6) mit der Maßgabe auf eine Unterlage (9) und unterhalb eines Siebes platziert werden, dass sie sich unterhalb von für die Beschichtungsmasse durchlässigen Flächenanteilen des im Übrigen undurchlässigen Siebes befinden, und dass die Beschichtungsmasse auf das Sieb aufgebracht und über die flächengleich mit den zu beschichtenden Einzelteilen (4,5,6) ausgestalteten und angeordneten Flächenanteile auf die Einzelteile übertragen wird.

2. Verfahren nach Anspruch 1, **dadurch gekennzeichnet, dass** ein Silikonkautschuk als Beschichtungsmasse verwendet wird.

3. Verfahren nach Anspruch 1 oder 2, **dadurch gekennzeichnet, dass** die Masse der aufgetragenen Beschichtungsmasse individuell bei jedem Einzelteil (4',5',6') eingestellt wird.

4. Verwendung eines Verfahrens nach einem der vorangegangenen Ansprüche 1 bis 3 zur Herstellung von aus einem mit Silikon beschichteten Gewebe bestehenden Einzelteilen (4',5',6') des Luftsackes eines Airbagsystems.

5. Vorrichtung zur Durchführung des Verfahrens nach einem der vorangegangenen Ansprüche 1 bis 4, **gekennzeichnet durch** die in Materialflussrichtung gesehen Hintereinanordnung einer zum Zuschneiden von Einzelteilen (4,5,6) aus einer Gewebebahn sowie zum Verwerfen von Restteilen (7) der Gewebebahn bestimmten Zuschneidestation (1'), einer zum Übertragen der Beschichtungsmasse bestimmten Beschichtungsstation (8) und einer zur Behandlung der Beschichtungsmasse bestimmten Beheizungsstation (11).

## Claims

1. A process for producing sheetlike individual portions (4', 5', 6') consisting of woven fabric (2) and coated with an originally flow- or brushable coating composition by proceeding from a reel of wound-up woven fabric web, **characterized in that** the uncoated individual portions (4, 5, 6) are cut out of the woven fabric web and the remaining residual portions (7) of the woven fabric web are discarded as waste, **in that** the uncoated individual portions (4, 5, 6) are placed on a support (9) and underneath a sieve such that they are situated underneath areal fractions of the sieve which are permeable to the coating composition and which sieve is otherwise impermeable, and **in that** the coating composition is applied to the sieve and is transferred to the individual portions through the areal fractions designed and arranged to be equiareal to the individual portions (4, 5, 6) to be coated.

2. The process according to claim 1 that is **characterized in that** a silicone rubber is used as coating composition.

3. The process according to claim 1 or 2 that is **characterized in that** the mass of coating composition applied is individually adjusted for every individual portion (4', 5', 6').

4. The use of a process according to any one of the preceding claims 1 to 3 for producing individual portions (4', 5', 6') of the airbag of an airbag system which consists of a silicone-coated woven fabric.

5. Apparatus for carrying out the process according to any one of the preceding claims 1 to 4, **characterized by** the consecutive arrangement, in the direction of material flow, of a cutting station (1') adapted for cutting to size individual portions (4, 5, 6) out of a woven fabric web and for discarding residual portions (7) of the woven fabric web, a coating station (8) for transferring the coating composition and a heating station (11) for treating the coating composition.

## Revendications

1. Procédé pour la fabrication de pièces plates (4', 5', 6') composées de textile (2) et enduites d'une pâte d'enduction pouvant s'écouler ou être étalée dans son état initial, à partir d'un lé de textile dévidé par un rouleau, **caractérisé en ce que** les pièces non enduites (4, 5, 6) sont découpées dans le lé de textile et les parties restantes (7) du lé de textile sont jetées comme déchets, **en ce que** les pièces non enduites (4, 5, 6) sont positionnées sur un support (9) et sous un pochoir de telle façon qu'elles se trouvent en dessous de parties de surface perméables à la pâte d'enduction du pochoir qui est par ailleurs imperméable, et **en ce que** la pâte d'enduction est appliquée sur le pochoir et reportée sur les pièces par les parties de surface conçues et disposées de façon à correspondre par leur surface aux pièces (4, 5, 6) à enduire.

2. Procédé selon la revendication 1, **caractérisé en ce que** la pâte d'enduction utilisée est un caoutchouc au silicone.

3. Procédé selon la revendication 1 ou 2, **caractérisé en ce que** la masse de la pâte d'enduction appliquée est adaptée individuellement à chaque pièce (4', 5', 6').

4. Mise en oeuvre d'un procédé selon l'une des revendications 1 à 3 pour la fabrication de pièces (4', 5', 6') du coussin gonflable d'un système d'airbag faites de textile enduit de silicone.

5. Dispositif pour la mise en oeuvre du procédé selon l'une des revendications 1 à 4, **caractérisé en ce qu'**il comporte, disposés l'un derrière l'autre dans le sens de circulation du matériau, un poste de découpe (1') pour découper des pièces (4, 5, 6) à partir d'un lé de textile et rejeter les parties restantes (7) du lé de textile, un poste d'enduction (8) pour le transfert de la pâte d'enduction et un poste de chauffage (11) pour le traitement de la pâte d'enduction.
